# EUROPÄISCHE PATENTANMELDUNG

(11) **EP 2 728 704 A2**
(43) Veröffentlichungstag der Anmeldung: **07.05.2014**
(21) Anmeldenummer: 13191013.5
(22) Anmeldetag: 31.10.2013
(51) Int. Cl.: H02J 7/00

(54) **Laderegler-System zur Steuerung und/oder Regelung elektrischer Energie und/oder thermischer Energie aus erneuerbaren Quellen**

(30) Priorität: 31.10.2012 DE 102012110423
(71) Anmelder: Kirschbaum, Axel, 47647 Kerken (DE)
(72) Erfinder: Kirschbaum, Axel, 47647 Kerken (DE)
(74) Vertreter: Ring & Weisbrodt

(57) **Zusammenfassung**

Die vorliegende Erfindung betrifft ein Laderegler-System zur Steuerung und/oder Regelung von
wenigstens einer Anlage zur dezentralen Erzeugung elektrischer und/oder thermischer Energie aus erneuerbaren Quellen,
wenigstens einer Einrichtung zur Speicherung elektrischer Energie,
welche von bzw. mittels der wenigstens einen Anlage zur dezentralen Erzeugung elektrischer und/oder thermischer Energie aus erneuerbaren Quellen mit elektrischer Energie geladen wird,
und
wenigstens einem elektrischen Verbraucher,
welcher von der Einrichtung zur Speicherung elektrischer Energie und/oder von bzw. mittels einer Anlage zur Erzeugung elektrischer und/oder thermischer Energie mit elektrischer Energie versorgt wird,
mit
wenigstens einem Modul
zur Regelung der Ladung der Einrichtung zur Speicherung elektrischer Energie durch eine Anlage zur Erzeugung elektrischer und/oder thermischer Energie,
und
zur Steuerung der Versorgung eines elektrischen Verbrauchers durch die Einrichtung zur Speicherung elektrischer Energie und/oder durch die Anlage zur Erzeugung elektrischer und/oder thermischer Energie,
und
einer zentralen Hauptsteuerungseinrichtung
zur Steuerung des wenigstens einen Moduls,
wobei
das wenigstens eine Modul und die zentrale Hauptsteuerungseinrichtung über ein drahtgebundenes lokales Netzwerk, vorzugsweise ein LAN (LAN: Local Area Network), und/oder ein drahtloses lokales Netzwerk, vorzugsweise ein WLAN (WLAN: Wireless LAN), miteinander vernetzt sind.

## Beschreibung

Die vorliegende Erfindung betrifft ein Laderegler-System zur Steuerung und/oder Regelung von wenigstens einer Anlage zur dezentralen Erzeugung elektrischer und/oder thermischer Energie aus erneuerbaren Quellen.

Im Zusammenhang mit Anlagen zur dezentralen Erzeugung elektrischer und/oder thermischer Energie aus erneuerbaren Quellen, wie beispielsweise Windkraftanlagen, Photovoltaikanlagen und dergleichen Anlagen zur Strom- bzw. Wärmegewinnung, sind sogenannte Laderegler bekannt, welche primär die Aufgabe haben, elektrische Energie in das öffentliche Versorgungsnetz einzuspeisen oder sekundär das Aufladen von Einrichtungen zur Speicherung elektrischer Energie, sogenannten Speichermedien wie Akkumulatoren bzw. Batterien, technisch umzusetzen.

Nachteilig bei den bisher bekannten Ladereglern ist, dass diese bauartbedingt in der Regel nur auf bzw. für bestimmte Anlagen zur dezentralen Erzeugung elektrischer und/oder thermischer Energie abgestimmt bzw. ausgelegt sind. So können Laderegler insbesondere aufgrund der erforderlichen Leistungsdaten bzw. Leistungsbereiche für bestimmte Windkraftanlagen nicht für andere Windkraftanlagen verwendet werden. Ferner sind Laderegler für Windkraftanlagen in der Regel nicht als Laderegler für Photovoltaikanlagen verwendbar. Es ist daher bisher erforderlich, für jede Anlage zur dezentralen Erzeugung elektrischer und/oder thermischer Energie aus erneuerbaren Quellen separate Laderegler und ferner auch separate Einrichtungen zur Speicherung elektrischer Energie zu verwenden.

Darüber hinaus sind die bisher bekannten Laderegler hinsichtlich ihrer Leistungsdaten bzw. Leistungsbereiche für insbesondere unterschiedliche Anlagen zur dezentralen Erzeugung elektrischer und/oder thermischer Energie im Zusammenhang mit Einrichtungen zur Speicherung elektrischer Energie bisher nicht skalierbar, wodurch insbesondere eine einfache Kombination von unterschiedlichen Anlagen zur dezentralen Erzeugung elektrischer und/oder thermischer Energie, wie beispielsweise Windkraftanlagen, Photovoltaikanlagen und/oder dergleichen Anlagen zur Strom- bzw. Wärmegewinnung, als auch eine einfache Erweiterung derartiger Anlagen weitestgehend unmöglich ist.

Vor diesem Hintergrund sind im Einzelnen insbesondere folgende Probleme im Zusammenhang mit bisher bekannten Ladereglern für Anlagen zur dezentralen Erzeugung elektrischer und/oder thermischer Energie gegeben:
- Die Laderegler sind primär lediglich auf eine Energieerzeugungsanlage ausgerichtet und ermöglichen insbesondere keine gemeinsame Verwendung und Verwaltung eines Ladereglers für bzw. mit anderen Energieerzeugungsanlagen, beispielsweise elektrisch erzeugter Energien aus Windkraftanlagen, Photovoltaikanlagen oder aus Verbrennungs-motorisch erzeugter Energie, insbesondere Stromaggregaten, sowie thermisch erzeugter Energie durch Bündelung der Sonneneinstrahlung mittels Spiegelumlenkung oder dergleichen. So fehlt beispielsweise eine integrierbare automatische Optimierung der Stellung bzw. Ausrichtung von Solarmodulen, wie Photovoltaikmodulen, Solarthermikmodulen und/oder Parabolspiegeln zur Bündelung von Sonneneinstrahlung, hinsichtlich einer optimalen Sonnenstrahlausnutzung.
- Der Leistungsbereich der Laderegler ist in der Regel auf eine bestimmte Energieerzeugungsanlage beschränkt und es besteht weitestgehend keine Möglichkeit größere Leistungen zu verarbeiten und/oder funktionale Verknüpfungen zwischen verschiedenen Energieerzeugungsanlagen zu verwalten.
- Lastseitig sind in der Regel nur eine begrenzte Anzahl von Einrichtungen zur Speicherung elektrischer Energie, sogenannten Speichermedien wie Akkumulatoren bzw. Batterien, verwendbar, wodurch die Gesamtkapazität einer Anlage limitiert ist.
- Der Aufbau von Ladereglern insbesondere für verschiedene Energieerzeugungsanlagen ist in der Regel wenig transparent, wodurch insbesondere Servicemöglichkeiten eingeschränkt sind. Bei einem Defekt eines Ladereglers ist in der Regel ein Austauschen einer gesamten Baugruppe erforderlich.
- Die Laderegler sind nicht in der Lage Leistungsspitzen, welche beispielsweise durch Drehzahlschwankungen von Generatoren oder auch durch schnelle Witterungsänderungen auftreten können, zu verarbeiten. In solchen Fällen ist insbesondere eine Zwischenspeicherung und eine gleichmäßige Versorgung von Einrichtungen zur Speicherung elektrischer Energie mit Ladestrom ist nicht möglich, wodurch der Verschleiß derartiger Speichereinrichtungen, insbesondere ein sogenannter Memory Effekt von Akkumulatoren, vergrößert ist.
- Die Laderegler ermöglichen bisher kein integrierbares und differenziertes Energiemanagement für den Betrieb von direkten und/oder indirekten elektrischen Verbrauchern.

Zur Meidung bzw. Beseitigung der vorgenannten Probleme wird mit der vorliegenden Erfindung ein
Laderegler-System zur Steuerung und/oder Regelung von
wenigstens einer Anlage zur dezentralen Erzeugung elektrischer und/oder thermischer
   Energie aus erneuerbaren Quellen,
wenigstens einer Einrichtung zur Speicherung elektrischer Energie,
   welche von bzw. mittels der wenigstens einen Anlage zur dezentralen Erzeugung elektrischer und/oder thermischer Energie aus erneuerbaren Quellen mit elektrischer Energie geladen wird,
und
wenigstens einem elektrischen Verbraucher,
   welcher von der Einrichtung zur Speicherung elektrischer Energie und/oder von bzw. mittels einer Anlage zur Erzeugung elektrischer und/oder thermischer Energie mit elektrischer Energie versorgt wird,
mit
wenigstens einem Modul
   zur Regelung der Ladung der Einrichtung zur Speicherung elektrischer Energie durch eine Anlage zur Erzeugung elektrischer und/oder thermischer Energie,
   und
   zur Steuerung der Versorgung eines elektrischen Verbrauchers durch die Einrichtung zur Speicherung elektrischer Energie und/oder durch die Anlage zur Erzeugung elektrischer und/oder thermischer Energie,
und
einer zentralen Hauptsteuerungseinrichtung
   zur Steuerung des wenigstens einen Moduls,
   wobei
   das wenigstens eine Modul und die zentrale Hauptsteuerungseinrichtung über ein drahtgebundenes lokales Netzwerk, vorzugsweise ein LAN (LAN: Local Area Network), und/oder ein drahtloses lokales Netzwerk, vorzugsweise ein WLAN (WLAN: Wireless LAN), miteinander vernetzt sind,
vorgeschlagen.

Erfindungsgemäß ist ein modularer Aufbau eines Systems von Ladereglern ermöglicht, welches auf einfache und kostengünstige Art und Weise umfangreiche Anpassungen und Skalierungen und darüber hinaus eine einfache und einheitliche Verwaltung verschiedener Energieerzeugungsanlagen ermöglicht.

Vorteilhafterweise weist das wenigstens eine Modul eine Spannungsversorgung, welche vorzugsweise mit der Einrichtung zur Speicherung elektrischer Energie verbunden ist, einen Mikroprozessor mit analogen Eingängen und digitalen Ein- und Ausgängen, eine Schnittstelle zum Anschluss des Moduls an das lokale Netzwerk (LAN/WLAN), und wenigstens ein Leistungsschütz und/oder einen Brückengleichrichter für jede Anlage zur Erzeugung elektrischer und/oder thermischer Energie und/oder jeden elektrischen Verbraucher, welches bzw. welcher über ein Koppelrelais von dem Mikroprozessor schaltbar ist, auf.

Eine weitere Ausgestaltung der Erfindung sieht vorteilhafterweise vor, dass das Modul ferner wenigstens eine Hochleistungsdiode für jede angeschlossene Anlage zur Erzeugung elektrischer und/oder thermischer Energie aufweist.

Gemäß einer weiteren vorteilhaften Ausgestaltung der Erfindung sieht vor, dass das Modul ferner Großkondensatoren aufweist, die ein gleichmäßiges Laden der Einrichtung zur Speicherung elektrischer Energie ermöglichen.

Vorteilhafterweise weist die zentrale Hauptsteuerungseinrichtung wenigstens eine Recheneinrichtung, wenigstens eine Speichereinrichtung, eine Schnittstelle zum Anschluss der zentralen Hauptsteuerungseinrichtung an das lokale Netzwerk (LAN/WLAN), wenigstens eine Ausgabeeinrichtung, vorzugsweise ein Display oder dergleichen, und wenigstens eine Eingabeeinrichtung, vorzugsweise eine Tastatur und/oder eine sogenannte Maus oder dergleichen, auf. In einer konkreten Ausgestaltung der Erfindung ist die Hauptsteuerungseinrichtung durch einen sogenannten Personal Computer (PC) bereitgestellt, auf welchem ein von dem PC ausführbares Programm ausgeführt wird, welches die Funktionen der Hauptsteuerungseinrichtung realisiert.

In einer weiteren vorteilhaften Ausgestaltung der Erfindung weist die zentrale Hauptsteuerungseinrichtung wenigstens eine Schnittstelle für einen dynamischen Datenaustausch zwischen verschiedenen Anwendungsprogrammen auf, vorzugsweise um eine Integration von Fremdsoftware bzw. Fremdsoftwareprodukten in das erfindungsgemäße System ermöglichen zu können, insbesondere Programme (Software) zur Steuerung und/oder Regelung von Ladereglern. Die Schnittstelle ist vorzugsweise eine sogenannte DDE-Schnittstelle (DDE: Dynamic Data Exchange).

Eine weitere vorteilhafte Ausgestaltung der Erfindung ist gekennzeichnet durch eine Einrichtung zur Erfassung von vorzugsweise ortsbezogenen Wetterinformationen, insbesondere umfassend Informationen hinsichtlich Temperatur, Lichtintensität, Lichtstärke, Windstärke, Windrichtung, Niederschlag, und/oder Niederschlagsmenge, welche mit der zentralen Hauptsteuerungseinrichtung verbindbar ist, vorzugsweise direkt oder über das lokale Netzwerk (LAN/WLAN).

Eine vorteilhafte Ausgestaltung der Erfindung ist gekennzeichnet durch wenigstens eine Möglichkeit der Fernwartung der Hauptsteuerung und/oder der einzelnen Module über das lokale Netzwerk (LAN/WLAN), vorzugsweise mittels Internet.

Eine weitere besonders vorteilhafte Ausgestaltung der Erfindung sieht vor, dass das Laderegler-System im Falle von erforderlichen Wartungs- und/oder Reaktionsanforderungen durch den Bediener bzw. Betreiber des Laderegler-Systems diesem automatisch eine entsprechende Benachrichtigung über das lokale Netzwerk (LAN/WLAN) zukommen lässt, vorzugsweise über das Internet mittels E-Mail.

Eine weitere vorteilhafte Ausgestaltung der Erfindung sieht ein Laderegler-System vor, wobei die zentrale Hauptsteuerungseinrichtung eine speicherprogrammierbare Steuerung (selbstständige Hauptsteuerung) aufweist, die derart ausgebildet und/oder eingerichtet ist, dass sämtliche Funktionalitäten des wenigstens einen Moduls als intelligenter Laderegler realisierbar sind. Vorteilhafterweise ist das wenigstens eine Modul dabei Bestandteil der Hauptsteuerungseinrichtung bzw. die Hauptsteuerungseinrichtung Bestandteil des wenigstens einen Moduls und bildet so eine selbstständige Hauptsteuerung.

Weitere Einzelheiten, Merkmale und Vorteile der Erfindung werden nachfolgend anhand der in den Figuren der Zeichnung dargestellten Ausführungsbeispiele näher erläutert. Dabei zeigen:
- Fig. 1: eine Prinzipdarstellung eines erfindungsgemäßen Laderegler-Systems zur Steuerung und/oder Regelung elektrischer Energie und/oder thermischer Energie aus erneuerbaren Quellen mit einem drahtgebundenen lokalen Netzwerk (LAN);
- Fig. 1a: eine Prinzipdarstellung nach Fig. 1, mit einer selbstständigen Hauptsteuerung;
- Fig. 2: eine Prinzipdarstellung eines erfindungsgemäßen Laderegler-Systems zur Steuerung und/oder Regelung elektrischer Energie und/oder thermischer Energie aus erneuerbaren Quellen mit einem drahtlosen lokalen Netzwerk (WLAN);
- Fig. 2a: eine Prinzipdarstellung nach Fig. 2, mit einer selbstständigen Hauptsteuerung;
- Fig. 2b: eine Prinzipdarstellung einer Verfielfachung der Funktionen und/oder Funktionalitäten einer selbstständigen Hauptsteuerung nach Fig 1a und/oder Fig. 2a;
- Fig. 3: eine Prinzipdarstellung eines Moduls für eine Windkraftanlage und eine Photovoltaikanlage, vorliegend als Basismodul;
- Fig. 4: eine prinzipielle Schaltungsanordnung für eine Energieanpassung einer Windkraftanlage nach Fig. 3;
- Fig. 5: eine prinzipielle Schaltungsanordnung für eine Energieanpassung einer Photovoltaikanlagen nach Fig. 3;
- Fig. 6: eine prinzipielle Schaltungsanordnung für eine Spannungsversorgung von Modulen eines erfindungsgemäßen Systems;
- Fig. 7: eine Prinzipdarstellung eines Moduls für eine Stromgeneratoranlage mit zwei Generatoren, vorliegend als Erweiterungsmodul;
- Fig. 8: eine prinzipielle Schaltungsanordnung für eine Energieanpassung für einen ersten Stromgenerator einer Stromgeneratoranlage nach Fig. 7;
- Fig. 9: eine prinzipielle Schaltungsanordnung für eine Energieanpassung für einen zweiten Stromgenerator einer Stromgeneratoranlage nach Fig. 7;
- Fig. 10: eine Prinzipdarstellung eines Moduls für eine Windkraftanlage mit zwei Windrädern, vorliegend als Erweiterungsmodul;
- Fig. 11: eine prinzipielle Schaltungsanordnung für eine Energieanpassung eines ersten Windrades einer Windkraftanlage nach Fig. 10;
- Fig. 12: eine prinzipielle Schaltungsanordnung für eine Energieanpassung eines zweiten Windrades einer Windkraftanlage nach Fig. 10;
- Fig. 13: eine Prinzipdarstellung eines Moduls für eine Solarmodulnachführung mit Verstellmotoren, vorliegend als Erweiterungsmodul;
- Fig. 14: eine prinzipielle Schaltungsanordnung für eine Azimut-Verstellung eines Solarmoduls nach Fig. 13;
- Fig. 15: eine prinzipielle Schaltungsanordnung für eine Elevation-Verstellung eines Solarmoduls nach Fig. 13;
- Fig. 16: eine Prinzipdarstellung eines Moduls für Wärmetauschergeneratoren, vorliegend als Erweiterungsmodul;
- Fig. 17: eine prinzipielle Schaltungsanordnung für eine Temperaturregelung von Wärmetauschergeneratoren nach Fig. 16;
- Fig. 18: eine prinzipielle Schaltungsanordnung für eine Drehzahlverstellung von Wärmetauschergeneratoren nach Fig. 16;
- Fig. 19: eine prinzipielle Schaltungsanordnung für eine Ventilsteuerung von Wärmetauschergeneratoren nach Fig. 16; und
- Fig. 20: eine Prinzipdarstellung eines Moduls für ein Verbrauchsenergiemanagement, vorliegend als Erweiterungsmodul.

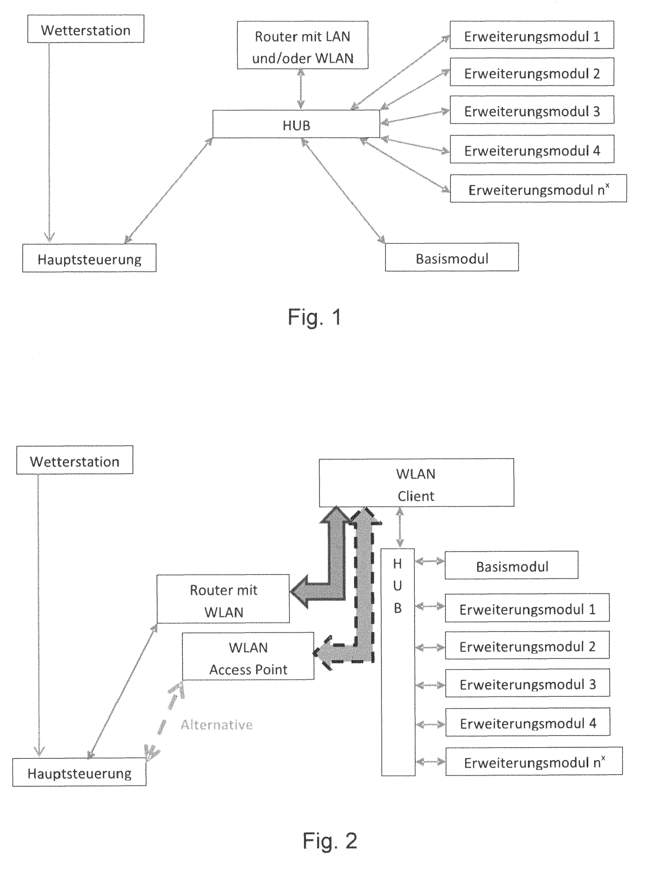

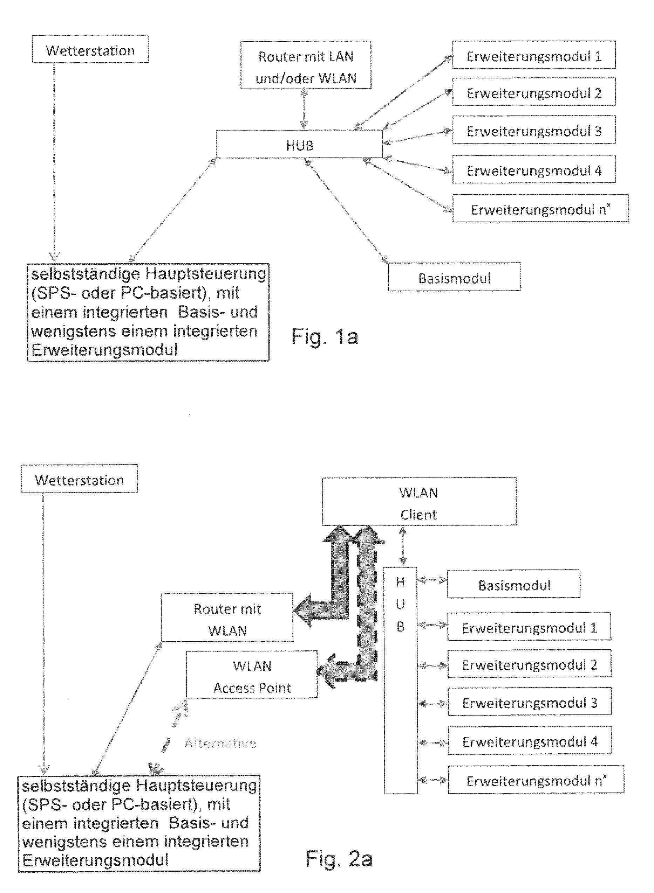

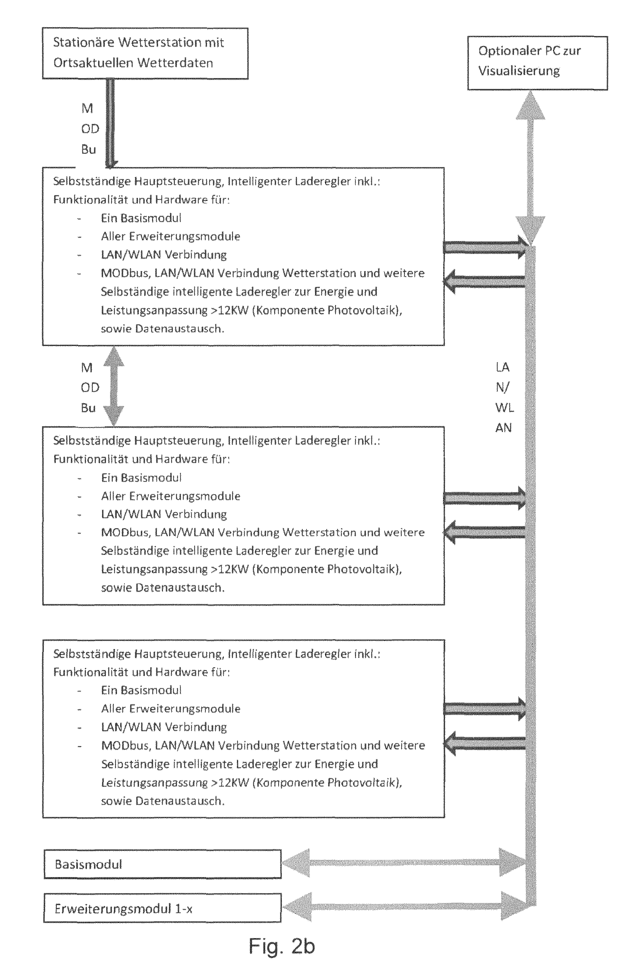

Fig. 1 und Fig. 2 zeigen jeweils in einer Prinzipdarstellung den Aufbau eines Laderegler-Systems zur Steuerung und/oder Regelung elektrischer Energie und/oder thermischer Energie aus erneuerbaren Quellen mit einem modularen Aufbau von Baugruppen bzw. Funktionsmodulen. Bei dem Ausführungsbeispiel nach Fig. 1 sind die einzelnen Module über ein drahtgebundenes lokales Netzwerk (LAN) miteinander vernetzt. Bei dem Ausführungsbeispiel nach Fig. 2 sind die einzelnen Module über ein drahtloses lokales Netzwerk (WLAN) miteinander vernetzt.

Dabei wird als Hauptsteuerungseinrichtung bzw. Hauptsteuerung vorzugsweise ein kleiner Personal Computer (Mini-PC) eingesetzt, welcher über ein LAN-Netzwerk (Fig. 1) oder ein WLAN-Netzwerk (Fig. 2), auch WIFI genannt, die einzelnen als Module ausgebildeten Funktionsbaugruppen vernetzt. Eingaben erfolgen bei der Hauptsteuerungseinrichtung über eine Tastatur und eine Maus oder dergleichen Eingabeeinrichtungen. Ein Monitor als Ausgabeeinrichtung steht dem Bediener bzw. Betreiber des Laderegler-Systems zur Überwachung und Bedienung zur Verfügung. Auf dem die Hauptsteuerungseinrichtung bereitstellenden PC wird dazu ein Programm (Software) ausgeführt.

Hauptsteuerungseinrichtung/Hauptsteuerung:
Als Hauptsteuerungseinrichtung bzw. Hauptsteuerung wird ein handelsüblicher PC oder Mini PC eingesetzt, welcher vorzugsweise über folgende Mindest-Konfiguration für die Steuerung verfügt:
   - Hardware:
      o Intel Dual Core Processor;
      o 1 MB RAM;
      o 500GB Festplatte;
      o Eine freie USB-Schnittstelle für RS232/RS485-Wandler, oder freie RS232-Schnittstelle für RS232/RS485-Wandler
      o LAN Schnittstelle mit 100 Mbits oder entsprechende WLAN-Karte;
      o Monitor/Display als Ausgabeeinrichtung, mit einer Mindestauflösung von 800 mal 600 Pixel;
      o Tastatur als Eingabeeinrichtung; und
      o Maus als Eingabeeinrichtung
   - Betriebssystem: Windows XP, Windows Vista, Windows 7;
   - Software zur Umsetzung der Steuerung und/oder Regelung, als auch der Visualisierung derselben seitens der Ausgabeeinrichtung (Monitor/Display).
Über den RS232/RS485-Wandler der Hauptsteuerungseinrichtung erfolgt, vorzugsweise mittels MODBUS, über eine Busleitung ein Einlesen von Daten von einer GPS- Wetterstation als Einrichtung zur Erfassung von ortsbezogenen Wetterinformationen. Vorzugsweise umfassen diese Daten folgende Werte bzw. Parameter:
   - Außentemperatur;
   - Lichtintensität aus Süd, West und Ost;
   - Lichtstärke;
   - Windstärke;
   - Regensensor hinsichtlich Regen Ja/Nein;
   - Datum Tag, Monat, Jahr;
   - Uhrzeit Stunde, Minute und Sekunde;
   - Sonnenstand im Azimut und Elevation; und/oder
   - Längengrad und Breitengrad.

Diese Werte bzw. Parameter werden vorteilhafterweise von der Software zur Umsetzung der Steuerung und/oder Regelung als auch der Visualisierung derselben seitens der Ausgabeeinrichtung (Monitor/Display) über die nachfolgend weiter beschriebenen Module und der Hauptsteuerung eingelesen, verarbeitet und in Steuer-und/oder Regelsignale umgesetzt.

Über die LAN-Schnittstelle (Fig. 1) oder die WLAN-Schnittstelle (Fig. 2) werden die nachfolgend weiter beschriebenen Module mit der Hauptsteuerung verbunden. Dazu ist bei dem Ausführungsbeispiel nach Fig. 1 mindestens ein sogenannter HUB für die Vernetzung mittels LAN-Netzwerk (Fig. 1) erforderlich. Bei dem Ausführungsbeispiel nach Fig. 2 mit einem WLAN-Netzwerk (Fig. 2) ist mindestens ein sogenannter ACCSESS-Point oder Router mit WLAN, sowie ein Client erforderlich. Zur Überbrückung größerer Entfernungen zwischen den verschiedenen Energieerzeugungsanlagen und deren jeweiligen Modulen, oder aufgrund baulicher Bedingungen vor Ort derselben können bei Bedarf vorteilhafterweise sogenannte Repeater oder auch Richtantennen verwendet werden.

Die WLAN-Netzwerkverbindung gemäß Ausführungsbeispiel nach Fig. 2 wird vorzugsweise nur dann erforderlich, wenn örtliche Eigenschaften dies zwingend notwendig machen. Vorteilhafterweise sind die Errichtung und Einrichtung einer derartigen WLAN-Netzwerkverbindung einfach vornehmbar und relativ problemlos erweiterbar bzw. änderbar.

Die einzelnen als Module ausgebildeten Funktionsbaugruppen sind vorliegend vorteilhafterweise mit einem Basismodul mit den wesentlichen Grundfunktionalitäten sowie optionalen Erweiterungsmodulen bereitgestellt, welche nachfolgend näher beschrieben und erläutert werden.

Eine alternative Ausgestaltung der Erfindung sieht für die Hauptsteuerung als intelligenten Laderegler eine speicherprogrammierbare Steuerung (SPS: speicherprogrammierbare Steuerung) vor, die mittels Programmierung bzw. Anwendungssoftware derart ausgebildet und/oder eingerichtet ist, sämtliche Funktionalitäten des Basismoduls und der nachfolgenden Erweiterungsmodule zu realisieren und zu erfüllen, nachfolgend auch selbstständige Hauptsteuerung genannt (Fig. 1a bzw. Fig. 2a). Die selbstständige Hauptsteuerung kann vorteilhafterweise über den MODBUS (Zwei-Leiter-System) die von der stationären Wetterstation erfassten bzw. gespeicherten Daten einlesen. Ferner lassen sich über den MODBUS der selbstständige Hauptsteuerungen miteinander verbinden bzw. aneinander anschließen, um eine Verfielfachung der Funktionen und/oder Funktionalitäten einer selbstständigen Hauptsteuerung ermöglichen zu können (Fig. 2b). Der Datenaustausch erfolgt dabei über das genormte MODBUS-Protokoll. Alternativ und/oder ergänzend kann der Datenaustausch auch über LAN bzw. WLAN mit dem MODBUS-Protokoll erfolgen, insbesondere um Erweiterungsmodule mit der selbstständigen Hauptsteuerung zu verbinden. Damit ist eine Ausführung geschaffen, bei der der als selbstständige Hauptsteuerung ausgebildete intelligente Laderegler, entsprechend der PC-basierten Ausführung, eine vollständige Steuereinheit bereitstellt, bei der alle eingehenden und zu verarbeitenden Signale, Energieformen aus Windkraft, generatorischem Betrieb (beispielsweise Wasserkraft oder dergleichen), Photovoltaik und Solarthermik (solarthermische Energie) von kleinen bis hohen Leistungen gesteuert und verarbeitet werden. Vorteilhafterweise ist dazu auch die Energieverteilung in dem intelligenten Laderegler enthalten. Dabei entscheidet der intelligente Laderegler, ob ein elektrisches Speichermedium geladen wird, welche Ladungsmenge zur Verfügung gestellt wird, oder ob die vorhandene Energiemenge ausreichend ist diese an elektrische Verbraucher direkt oder indirekt über Wechselrichter und selektiver Trennung vom Versorgernetz dem Betreiber zur Verfügung zu stellen. Ferner entscheidet der inteligente Laderegler in einer weiteren vorteilhaften Ausgestaltung der Erfindung, ob die vorhandene elektrische Energie in Wärmeenergie gewandelt wird, insbesondere um die insgesamt erzeugte Energie dem Betreiber zu 100 % zur Eigennutzung zur Verfügung zu stellen.

Beide Hauptsteuerungsarten des intelligenten Ladereglers, also die PC-basierte Hauptsteuerung als auch die selbstständige Hauptsteuerung, basieren auf einem Eigenverbrauch der Energie von 100 %, so dass eine vorzugsweise elektrische Trennung vom Versorgernetz ermöglicht ist, sobald eine selektive elektrische Eigenversorgung möglich ist. Im Verlauf der Ladungskurve werden eine beliebige Anzahl weiterer Verbaucher, direkt oder indirekt über Wechselrichter, vom Netz getrennt und zu 100% durch selbsterzeugte Energie versorgt. Spitzenleistungen und nicht direkt benötigte erzeugte Energie wird in Wärmeenergie zur Speicherung gewandelt, beispielsweise mit einem Wasserspeicher einer Solaranlage. Vorteilhafterweise werden bei sinkender elektrischer Kapazität aus dem elektrischen Speicher, alle Verbraucher des Betreibers wieder selektiv mit dem Versorgernetz verbunden.

### Basismodul:

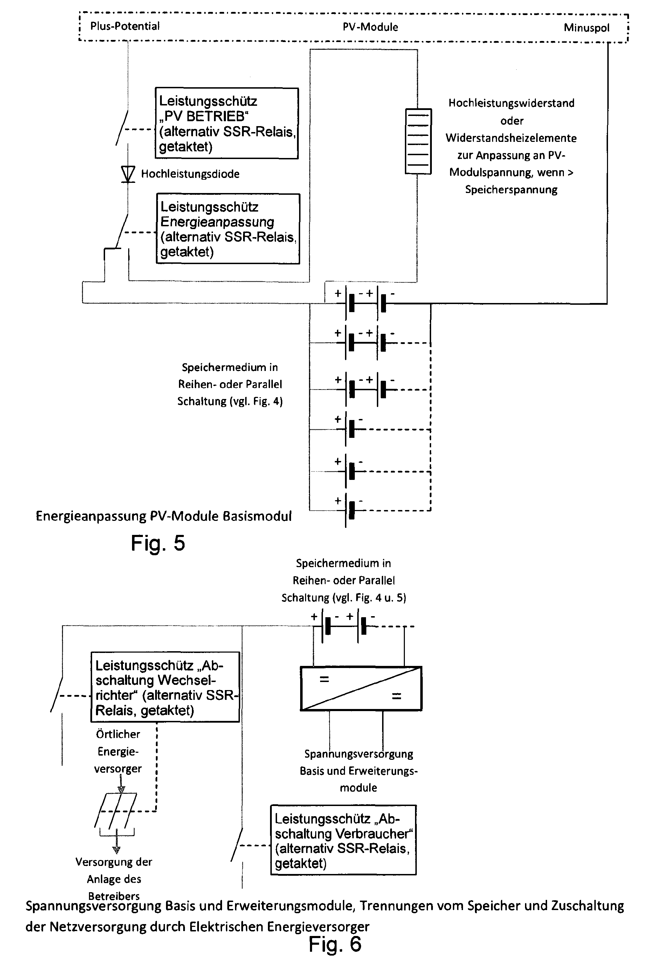

Das Basismodul weist eine Spannungsversorgung auf, die aus der Einrichtung zur Speicherung elektrischer Energie, nachfolgend auch Speicher bzw. Speichermedium genannt, alle weiteren Module (Erweiterungsmodule) versorgt, wie insbesondere in Fig. 6 dargestellt. Ferner weist das Basismodul eine sogenannte LAN- und/oder WLAN-Netzwerk-Schnittstelle für eine entsprechende Verbindung über ein Netzwerk zur Hauptsteuerungseinrichtung auf. Um einen gleichmäßigen Ladezyklus zu realisieren weist das Basismodul darüber hinaus handelsübliche Großkondensatoren auf. Die Anzahl der Erweiterungsmodule die vorteilhafterweise gleichzeitig eingesetzt werden können sind vorteilhafterweise nur durch die verwendete Netzwerktechnik begrenzt, vorliegend beispielhaft auf 252 mit gleicher Anfangsadresse. Sollen mehr Erweiterungsmodule eingesetzt werden ist ab Erweiterungsmodul 253 die Anfangsadresse zu ändern, so dass weitere 253 Erweiterungsmodule angeschlossen werden können. Somit lassen sich erfindungsgemäß vorteilhafterweise auch große Netzwerke mit modularen Funktionsbaugruppen realisieren.

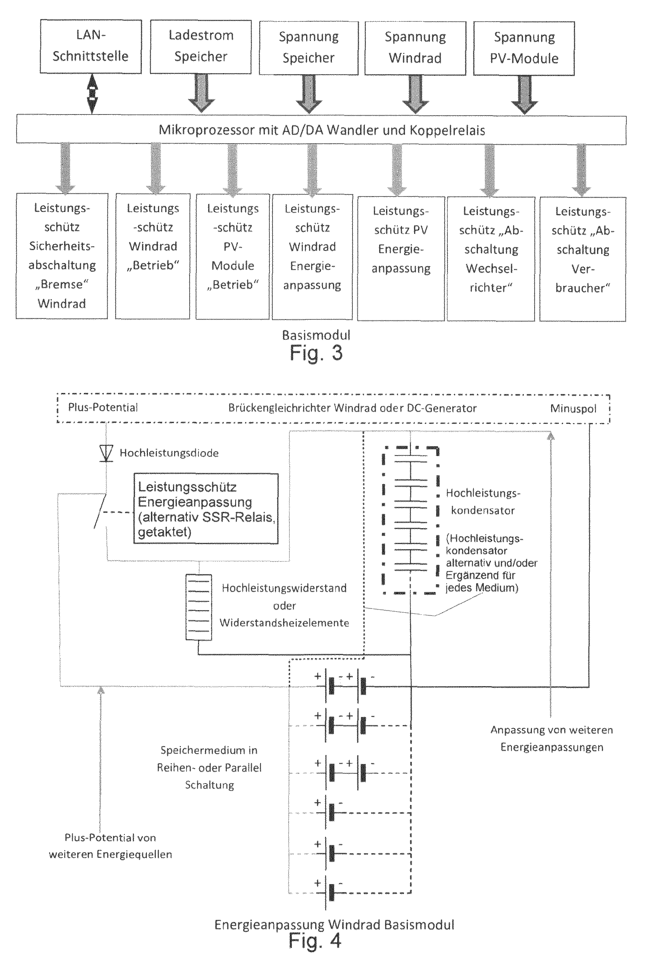

Vorteilhafterweise weist das Basismodul zur Angleichung von verschiedenen Energieerzeugungsanlagen bzw. Energiequellen vorliegend einen Mikroprozessor mit analogen Eingängen, digitalen Ein- und/oder Ausgängen, und/oder Brückengleichrichter als Zusatzelemente auf. Diese werden mittels Koppelrelais über Leistungsschütze geschaltet, wie in Fig. 3 dargestellt. Dabei kann vorteilhafterweise ein Teil der erzeugten Energie, die die Grenzen des Speichermediums übersteigt (z.B. die Batteriespannung), vorteilhafterweise direkt in Wärmeenergie gewandelt werden, während die verbleibende Energie dem Ladevorgang des Speichermediums weiter zugeführt wird (vgl. Fig. 4 und Fig. 5). In diesem Fall werden auch die Hochleistungskondensatoren geladen und die diesen zugeführte Energie gespeichert von diesen gespeichert, um diese zu einem späteren Zeitpunkt dem Ladevorgang zuführen zu können. Realisiert wird dies vorliegend, indem das Leistungsschütz erst wieder abfällt, wenn die gemessene Spannung vor der Hochleistungsdiode kleiner oder gleich der Speicherspannung ist. Dies ist beispielsweise der Fall, wenn ein Windrad in den Überspannungsbereich des Speichermediums geht (beispielsweise bei Einzel- und/oder Doppel-Drehstrom-Windkraftgeneratoren). Die Energie kann vorteilhafterweise mittels eines oder mehrerer Widerstandsheizelemente beispielsweise für einen Warmwasserspeicher oder eine Raumheizung genutzt werden oder aber über einen Hochleistungswiderstand abgeführt werden. Um Rückspannungen zu vermeiden ist jede Energieerzeugungsanlage bzw. Energiequelle vorteilhafterweise mit einer Hochleistungsdiode abgesichert, um eine Schädigung der angeschlossenen Energieerzeugungsanlagen bzw. Energiequellen zu vermeiden. Ferner ermöglicht die Hochleistungsdiode vorteilhafterweise eine selektive Spannungsmessung jeder einzelnen Energieerzeugungsanlage bzw. Energiequelle. In einer konkreten Ausgestaltung der Erfindung kommen Hochleistungsdioden zum Einsatz, die 15 A und mehr verarbeiten können, sowie Hochleistungskondensatoren mit Kapazitäten von 1 F und mehr.

In einer bevorzugten alternativen Ausgestaltung der Erfindung werden anstelle des Leistungsschützes (vgl. Fig. 4, Fig. 5, Fig. 6, Fig. 17) ein oder mehrere durch das Programm der Hauptsteuerung getaktete SSR-Relais verwendet. Die Taktung der SSR-Relais durch die Hauptsteuerung erfolgt vorteilhafterweise über die Rate einer Pulsweitenmodulation und/oder einer Pulspausenmodulation.

Die SSR-Relais (vgl. Fig. 4, Fig. 5, Fig. 6, Fig. 17) weisen vorteilhafterweise eine Schaltleistung im Gleichstromkreis von mindestens mit 25 A oder mehr auf, so dass eine nach oben offene Anzahl von Photovoltaikmodulen wie auch Windkraftanlagen anschließbar sind, und für eine optimale Energieausbeute eine automatische Anpassung der Taktrate an den Arbeitspunkt des Gesamtsystems vornehmbar ist. Bei vorhandener großer Energiemenge, niedrigem Ladungsbedarf und/oder geringem Energieverbrauch werden die im Gesamtsystem vorhandenen SSR-Relais oder Leistungsschütze (vgl. Fig. 4, Fig. 5, Fig. 6, Fig. 17) geöffnet und der Funktionsteil "Energieerzeugung" des intelligenten Ladereglers heruntergefahren, bis diese Energiereserve oder Energiereserven wieder benötigt werden. Dabei werden vorteilhafterweise Hochleistungskondensatoren (vgl. Fig. 4, Fig. 8, Fig. 9, Fig. 11, Fig. 12) mit einer Kapazität von einem 1 F und mehr zur kurzfristigen Speicherung von Spitzenleistungen durch Zuführung oder Abnahme parallel über jede durch die jeweilige Bauform vorgegebene elektrische Speicherzelle verschaltet.

Vorteilhafterweise weist das Basismodul zusätzlich eine oder mehrere Sicherheitsabschaltungen für ein Windrad oder mehrere Windräder auf. Diese Sicherheitsabschaltung kann vorzugsweise automatisch oder auch manuell erfolgen in dem der jeweilige Generator des Windrades kurz geschlossen wird und damit wie eine Bremse (beispielsweise bei Einzel- und/oder Doppel-Drehstrom-Windkraftgeneratoren). Die weitere Energiequelle des Basismoduls aus Photovoltaik (nachfolgend auch PV genannt) kann von dem Speichermedium über das Leistungsschütz "PV-Module Betrieb" zu Wartungsarbeiten getrennt werden. Vorteilhafterweise ermöglicht das Basismodul neben einer Nutzung von PV-Modulen bzw. PV-Anlagen als Energieerzeugungsanlage mit normierten Batteriespannungen ferner auch eine Nutzung von entsprechenden Spannungsniveaus aus PV-Modulen mit höheren Spannungen, welche auf dem Markt erhältlich sind.

Um eine optimale Sonnenausnutzung mit PV-Modulen als Energieerzeugungsanlagen realisieren zu können, erfolgt auch für diese vorteilhafterweise eine Energieanpassung. Fig. 5 zeigt eine entsprechende Schaltung. Bei dieser Schaltung werden die Module optimal genutzt da sie bereits bei wenig Sonneneinstrahlung eine Ladung des Speichermediums bewirken. Da im Tagesverlauf die Spannung mitunter für die Speichermedien zu hoch werden kann, wird vorteilhafterweise mittels der Schaltung dann ein Teil derselben für eine elektrische Wärmeerzeugung zur Verfügung gestellt, beispielsweise für einen Warmwasserspeicher oder eine Raumheizung genutzt oder aber über einen Hochleistungswiderstand abgeführt, bis das Spannungsniveau die für das Speichermedium zulässige obere Ladespannung wieder erreicht hat.

Durch eine Parallelschaltung der verschieden oder auch gleichen Energieerzeugungsanlagen als Energiequellen ist vorteilhafterweise eine Insellösung zur Selbstversorgung mittels Wechselrichter realisierbar. Durch eine Reihenschaltung verschiedener oder gleicher Energieerzeugungsanlagen als Energiequellen ist vorteilhafterweise ferner auch eine Einspeisung in öffentliche Netze mittels Wechselrichter umsetzbar.

Auf Anforderung oder als Systemschutz werden Wechselrichter über ein Leistungsschütz von der Einrichtung zur Speicherung elektrischer Energie (Speichermedium) getrennt und nachfolgende Verbraucher können an das vorhandene Energieversorgungsnetz geschaltet werden. Direkte Verbraucher werden unabhängig davon, vorzugsweise ausschließlich zum Systemschutz gegen eine Tiefentladung des Speichermediums, über ein Leistungsschütz vom Speicher getrennt (vgl. Fig. 6).

### Erweiterungsmodul 1 (Stromgenerator):

Das Erweiterungsmodul 1 (Stromgenerator) erhält seine Spannungsversorgung aus der Einrichtung zur Speicherung elektrischer Energie (vgl. Fig. 6, Speichermedium bzw. Speicher), und verfügt über eine sogenannte LAN- und/oder WLAN-Netzwerk-Schnittstelle für eine entsprechende Verbindung über ein Netzwerk zur Hauptsteuerungseinrichtung bzw. Hauptsteuerung. Die Anzahl der Erweiterungsmodule die vorteilhafterweise gleichzeitig eingesetzt werden können sind vorteilhafterweise nur durch die verwendete Netzwerktechnik begrenzt, vorliegend beispielhaft auf 252 mit gleicher Anfangsadresse. Sollen mehr Erweiterungsmodule eingesetzt werden ist ab Erweiterungsmodul 253 die Anfangsadresse zu ändern, so dass weitere 253 Erweiterungsmodule angeschlossen werden können. Somit lassen sich erfindungsgemäß vorteilhafterweise auch große Netzwerke mit modularen Funktionsbaugruppen realisieren.

Über "Vor-Ort"-Taster kann der Bediener zwei Generatoren starten und anhalten bzw. stoppen. Die Befehle zu den Generatoren werden mittels Schütze potentialfrei übergeben. Die Energieüberwachung der beiden Generatoren erfolgt vorzugsweise unabhängig voneinander geregelt. Dies kann zum einen durch eigene Laderegler der Generatoren erfolgen oder zum anderen durch den Aufbau des Erweiterungsmoduls 1.

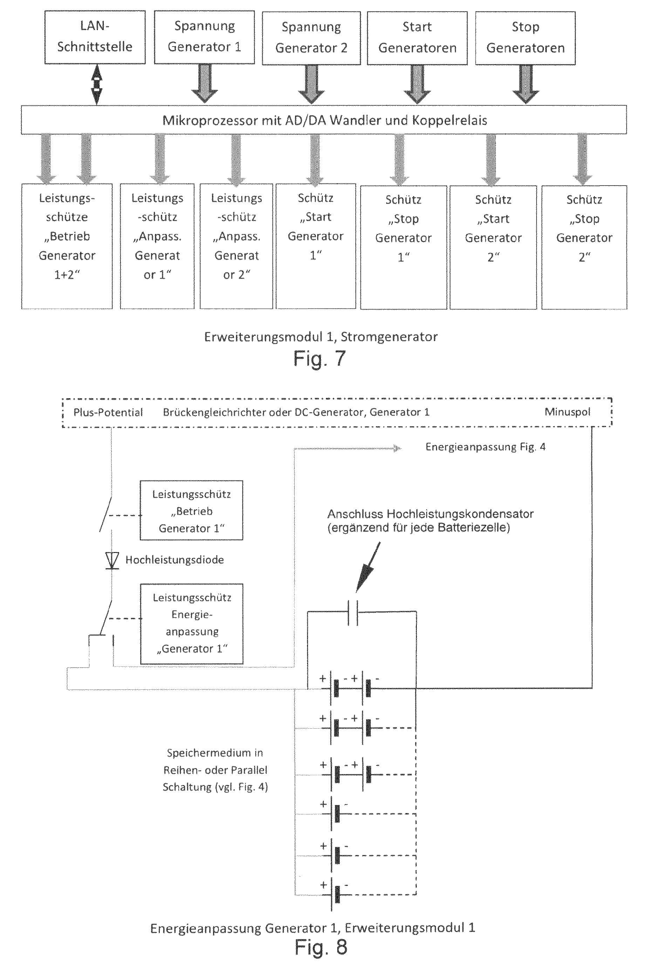

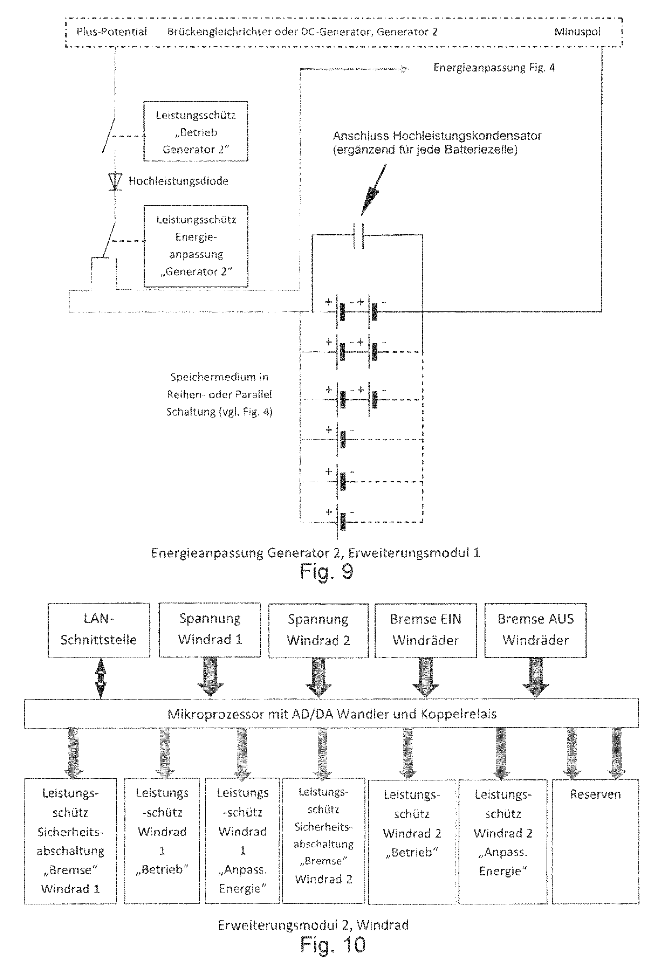

Vorteilhafterweise weist das Erweiterungsmodul 1 (Stromgenerator) zur Angleichung von verschiedenen Stromgeneratoren als Energieerzeugungsanlagen bzw. Energiequellen vorliegend einen Mikroprozessor mit analogen Eingängen, digitalen Ein- und/oder Ausgängen, und/oder Brückengleichrichter als Zusatzelemente auf. Diese werden mittels Koppelrelais über Leistungsschütze geschaltet, wie in Fig. 7 dargestellt. Dabei kann vorteilhafterweise ein Teil der erzeugten Energie, die die Grenzen des Speichermediums übersteigt (z.B. die Batteriespannung), vorteilhafterweise direkt in Wärmeenergie gewandelt werden, während die verbleibende Energie dem Ladevorgang des Speichermediums weiter zugeführt wird (vgl. Fig. 8 und Fig. 9). Dies ist von den Drehzahlen und Generatoren abhängig, die durch unabhängige Spannungsmessungen geregelt wird.

In diesem Fall werden die Hochleistungskondensatoren geladen und die diesen zugeführte Energie gespeichert um zu einem späteren Zeitpunkt wieder dem Ladevorgang zugeführt werden zu können, vorteilhafterweise indem die Leistungsschütze ("Anpass. Generator") erst wieder getrennt abfallen, wenn die gemessene Spannung vor der jeweiligen Hochleistungsdiode kleiner oder gleich der Speicherspannung ist. Ferner besteht die Möglichkeit mittels eines oder mehrerer Widerstandsheizelemente (z.B. für Warmwasserspeicher) die erzeugte Energie zu nutzten oder über einen Hochleistungswiderstand abzuführen (vgl. beispielsweise Fig. 4). Um Rückspannungen zu vermeiden ist diese Energiequelle mit einer Hochleistungsdiode abgesichert. Dadurch wird eine Schädigung eine der angewendeten Energieerzeugungsanlagen als Energiequellen vermieden und vorteilhafterweise eine selektive Spannungsmessung ermöglicht.

Über die Leistungsschütze "Betrieb Generator 1 + 2" kann der jeweilige Stromgenerator zu Wartungsarbeiten auf einfache Art und Weise vom System getrennt werden.

Auf Anforderung oder als Systemschutz werden Wechselrichter über ein Leistungsschütz vom Speicher getrennt. Verbraucher werden unabhängig, nur zum Systemschutz gegen eine Tiefentladung des Speichermediums, über ein Leistungsschütz vom Speichermedium getrennt (vgl. beispielsweise Fig. 6).

Da bei dem Betrieb eines Stromgenerators, mittels Verbrennungsmotors, Wärme entsteht ist diese, beispielsweise wie bei einem Blockheizkraftwerk (BHKW), vorteilhafterweise über ein nachfolgend noch beschriebenes Erweiterungsmodul 4 nutzbar.

### Erweiterungsmodul 2 (Windrad):

Das Erweiterungsmodul 2 (Windrad) erhält seine Spannungsversorgung aus der Einrichtung zur Speicherung elektrischer Energie (vgl. Fig. 6, Speichermedium bzw. Speicher). Das Erweiterungsmodul 2 (Windrad) ist in der Lage zwei Windräder unabhängig voneinander zu steuern und die Energiezuführung zum Speichermedium zu regeln. Das Erweiterungsmodul 2 (Windrad) verfügt über eine sogenannte LAN-und/oder WLAN-Netzwerk-Schnittstelle für eine entsprechende Verbindung über ein Netzwerk zur Hauptsteuerungseinrichtung bzw. Hauptsteuerung. Die Anzahl der Erweiterungsmodule die vorteilhafterweise gleichzeitig eingesetzt werden können sind vorteilhafterweise nur durch die verwendete Netzwerktechnik begrenzt, vorliegend beispielhaft auf 252 mit gleicher Anfangsadresse. Sollen mehr Erweiterungsmodule eingesetzt werden ist ab Erweiterungsmodul 253 die Anfangsadresse zu ändern, so dass weitere 253 Erweiterungsmodule angeschlossen werden können. Somit lassen sich erfindungsgemäß vorteilhafterweise auch große Netzwerke mit modularen Funktionsbaugruppen realisieren. Mittels zweier Taster ist der Bediener in der Lage die Windräder "Vor-Ort" für den Betrieb zu sperren oder frei zu schalten.

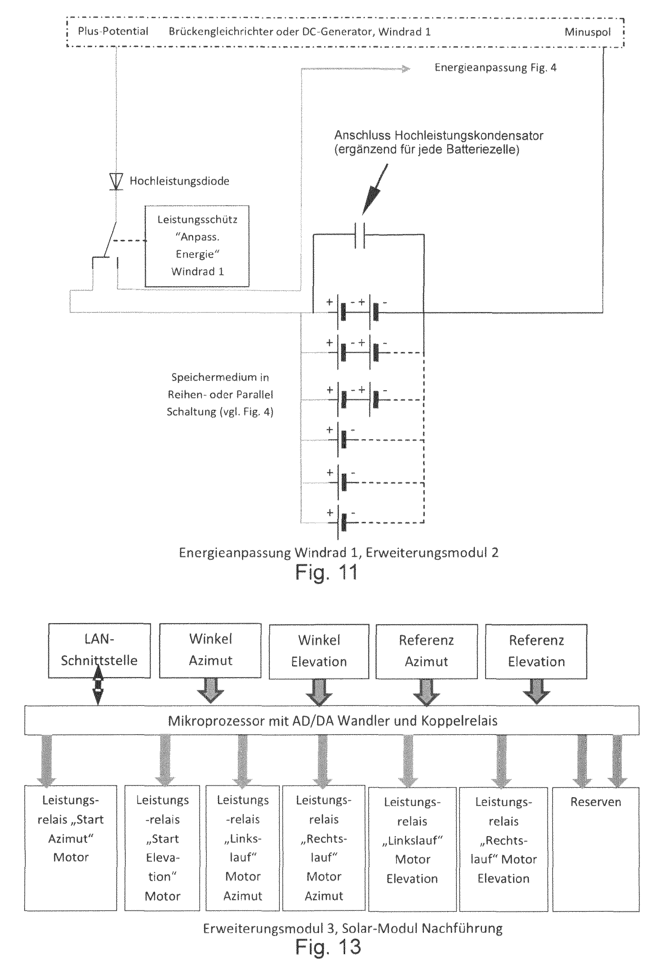

Vorteilhafterweise weist das Erweiterungsmodul 2 (Windrad) zur Angleichung von verschiedenen Stromgeneratoren als Energieerzeugungsanlagen bzw. Energiequellen vorliegend einen Mikroprozessor mit analogen Eingängen, digitalen Ein- und/oder Ausgängen, und/oder Brückengleichrichter als Zusatzelemente auf. Diese werden mittels Koppelrelais über Leistungsschütze geschaltet, wie in Fig. 10 dargestellt. Dabei kann vorteilhafterweise ein Teil der erzeugten Energie, die die Grenzen des Speichermediums übersteigt (z.B. die Batteriespannung), vorteilhafterweise direkt in Wärmeenergie gewandelt werden, während die verbleibende Energie dem Ladevorgang des Speichermediums weiter zugeführt wird (vgl. Fig. 11 und Fig. 12). Dies ist von den Drehzahlen der Windräder abhängig.

In diesem Fall werden die Hochleistungskondensatoren geladen und die diesen zugeführte Energie gespeichert um zu einem späteren Zeitpunkt wieder dem Ladevorgang zugeführt werden zu können. Dies ist realisiert, indem das Leistungsschütz erst wieder abfällt, wenn die gemessene Spannung vor der jeweiligen Hochleistungsdiode kleiner oder gleich der Speicherspannung ist. Dieses ist der Fall, wenn ein Windrad in den Überspannungsbereich des Speichermediums geht (beispielsweise bei Einzel- und/oder Doppel-Drehstrom-Windkraftgeneratoren). Ferner besteht die Möglichkeit mittels eines oder mehrerer Widerstandsheizelemente (z.B. für Warmwasserspeicher) die erzeugte Energie zu nutzten oder über einen Hochleistungswiderstand abzuführen (vgl. beispielsweise Fig. 4). Um Rückspannungen zu vermeiden ist jede Energiequelle mit einer Hochleistungsdiode abgesichert. Dadurch wird eine Schädigung eine der angewendeten Energieerzeugungsanlagen als Energiequellen vermieden und vorteilhafterweise eine selektive Spannungsmessung jeder einzelnen der angewendeten Energieerzeugungsanlagen ermöglicht.

Ferner weist das Erweiterungsmodul 2 (Windrad) eine oder mehrere (durch Basismodul) gegebene Sicherheitsabschaltung für das Windrad bzw. die Windräder auf. Diese Sicherheitsabschaltung kann vorteilhafterweise automatisch oder auch manuell erfolgen, in dem der jeweilige Generator des Windrades kurz geschlossen wird und wie eine Bremse wirkt (beispielsweise bei Einzel- und/oder Doppel-Drehstrom-Windkraftgeneratoren).

Durch eine Parallelschaltung der verschieden oder auch gleichen Energieerzeugungsanlagen als Energiequellen ist vorteilhafterweise eine Insellösung zur Selbstversorgung mittels Wechselrichter realisierbar. Durch eine Reihenschaltung verschiedener oder gleicher Energieerzeugungsanlagen als Energiequellen ist vorteilhafterweise ferner auch eine Einspeisung in öffentliche Netze mittels Wechselrichter umsetzbar.

### Erweiterungsmodul 3 (Solar-Modul-Nachführung):

Das Erweiterungsmodul 3 (Solar-Modul-Nachführung) ist vorteilhafterweise zur automatischen Nachführung des Anstellwinkels für Solarmodule (Photovoltaik, Solarthermie, Parabohlspiegel) ausgebildet und erhält seine Spannungsversorgung aus dem Speichermedium (vgl., Fig. 6). Es verfügt über eine sogenannte LAN-und/oder WLAN-Netzwerk-Schnittstelle für eine entsprechende Verbindung über ein Netzwerk zur Hauptsteuerungseinrichtung bzw. Hauptsteuerung. Das Erweiterungsmodul 3 (Solar-Modul-Nachführung) ist vorliegend vorteilhafterweise in der Lage zwei Verstellmotoren unabhängig voneinander zu steuern und somit die Energiezuführung zum Speichermedium optimierend regeln. Die Anzahl der Erweiterungsmodule die vorteilhafterweise gleichzeitig eingesetzt werden können sind vorteilhafterweise nur durch die verwendete Netzwerktechnik begrenzt, vorliegend beispielhaft auf 252 mit gleicher Anfangsadresse. Sollen mehr Erweiterungsmodule eingesetzt werden ist ab Erweiterungsmodul 253 die Anfangsadresse zu ändern, so dass weitere 253 Erweiterungsmodule angeschlossen werden können. Somit lassen sich erfindungsgemäß vorteilhafterweise auch große Netzwerke mit modularen

### Funktionsbaugruppen realisieren.

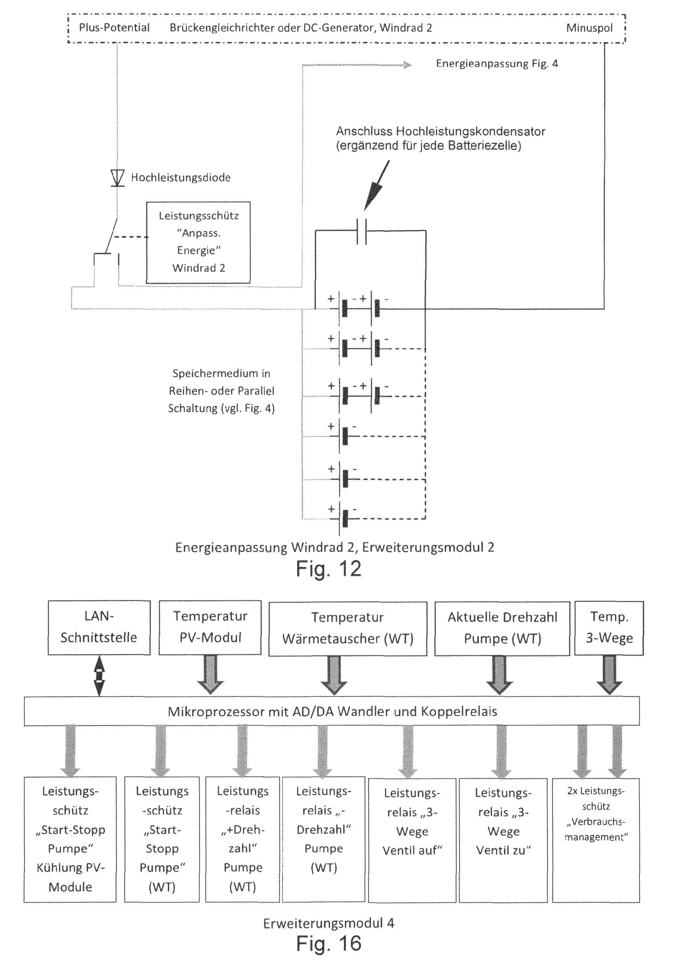

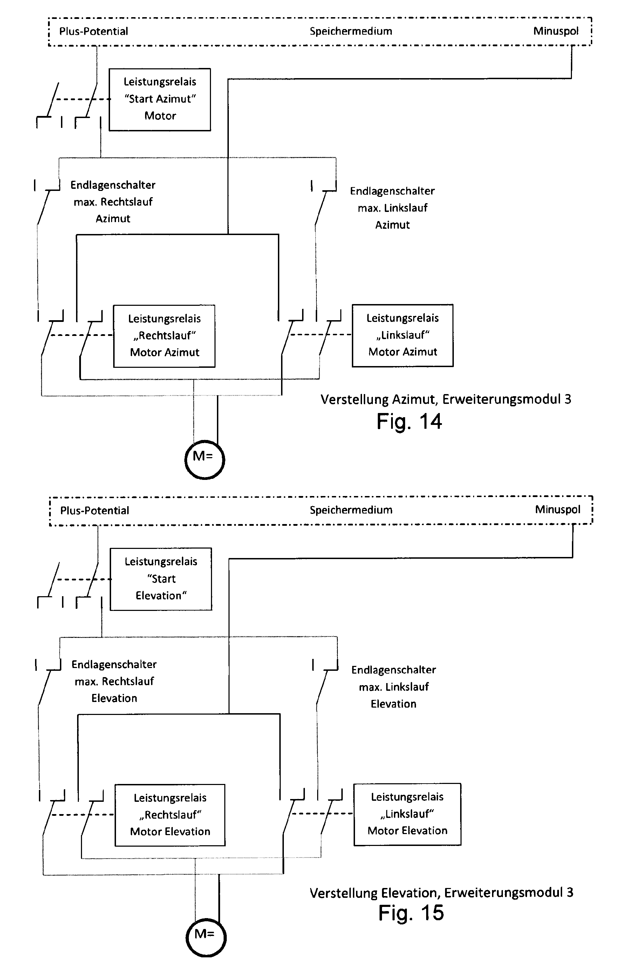

Ferner weist das Erweiterungsmodul 3 (Solar-Modul-Nachführung) vorliegend einen Mikroprozessor mit analogen Eingängen, digitalen Ein- und/oder Ausgängen, vier Endlagenschaltern und zwei Referenzschaltern als Zusatzelemente auf. Die Motoren der Solar-Modul-Nachführung werden mittels Koppelrelais über Leistungsrelais geschaltet (vgl. Fig. 13). Zwei Endlagenschalter pro Motor dienen zur Referenzfahrt in die Grundstellung und führen zu einer Software-bedingten Abschaltung des jeweiligen Motors. Zwei weitere Endlagenschalter begrenzen den jeweilig maximalen Fahrweg jedes einzelnen Antriebes (vgl. Fig. 14 und Fig. 15, Anschluss Gleichstrommotor direkt). Über zwei getrennte Winkelerfassungen positionieren die Motoren die Solarpanel im optimalen Winkel zum Sonnenstand im Azimut (Horizontalwinkel) und Elevation (Vertikalwinkel). Die Werte hierzu werden von der Wetterstation an der Hauptsteuerung vorgegeben. Die Software der Hauptsteuerung berechnet die optimalen Winkel (Vertikal und Horizontal). Ferner berechnet die Software als Stellwert, bzw. Befehl Linkslauf und Start/Stopp oder Rechtslauf und Start/Stopp und gibt diese aus.

Der Start/Stopp Befehl setzt sich logisch aus "1" = Start, "0" = Stopp zusammen. Die Befehle Linkslauf oder Rechtslauf und Start/Stopp müssen jeweils auf logisch "1" gesetzt sein damit ein direkt angeschlossener Motor eine Bewegung ausführt. Bei einer indirekten Ansteuerung von Motoren, ist es abhängig vom Fabrikat bzw. Hersteller ob die Befehle Start/Stopp und Linkslauf oder Rechtslauf benötigt werden. Bei einigen Herstellern reicht es aus den Befehl Rechtslauf oder Linkslauf an einen Gleichstromsteller oder Umrichter zu übergeben, bei anderen nicht. Um auch hier die Konstruktive Möglichkeit zu geben, folgt der Start/Stopp Befehl erst wenn der Befehl Rechtslauf oder Linkslauf ausgegeben wurde. Zusätzliche Kontakte von den Endlagenschaltern können die motorische Verstelleinheit vor mechanischem Schaden schützen, da die Befehlsausgabe vorteilhafterweise unterbrochen wird.

Die Stärke eines Motors ist abhängig von der Last die zu bewegen ist. Diese kann von wenigen Kilogramm bis zu mehreren 100 Kilogramm reichen, abhängig von der Masse die bewegt werden muss.

Um dieser großen Varianz mit einer einfachen Lösung begegnen zu können, ist die Schaltung vorteilhafterweise auf eine kleinstmögliche Gemeinsamkeit ausgelegt. Diese setzt sich vorteilhafterweise aus drei Befehlen zusammen, nämlich Linkslauf, Rechtslauf und Start/Stopp (vgl. Fig. 14 und Fig. 15). Damit lassen sich vorteilhafterweise folgende Größen von Motoren bedienen und steuern:
- Gleichstrommotoren (kleine bis mittlere Lasten)
   o Direkte Ansteuerung kleine Motoren 12/24/48V DC bis 750 Watt (Fig. 14 und Fig. 15)
   o Indirekte Ansteuerung größerer Antriebe über Gleichstromsteller, Dimension abhängig vom Herstellermarkt (Motor Abb.14 +15 entfällt)
- Drehstrommotoren (mittlere bis hohe Lasten, Motor Fig.14 und Fig. 15 entfällt)
   o Indirekte Ansteuerung über Umrichter, Größe abhängig vom Herstellermarkt
- Positionierantriebe (sehr hohe Lasten)
   o Indirekte Ansteuerung über entsprechendem Umrichter, Größe abhängig vom Herstellermarkt

Die Ansteuerung von Drehstrom- und Positionierantrieben erfolgt vorteilhafterweise durch die Verwendung eines geschalteten Plus-Potentiales auf weitere Koppel-, bzw. Lastrelais, vorzugsweise einzeln für den Azimut- und Elevation-Antrieb.

### Erweiterungsmodul 4 (PV-Modul Kühlung und Wärmeregelung von Wärmetauscher Generatoren):

Das Erweiterungsmodul 4 (PV-Modul Kühlung und Wärmeregelung von Wärmetauscher Generatoren) zur automatischen Kühlung für Photovoltaikmodule erhält seine Spannungsversorgung aus dem Speichermedium (vgl. Fig. 6). Es verfügt über eine sogenannte LAN- und/oder WLAN-Netzwerk-Schnittstelle für eine entsprechende Verbindung über ein Netzwerk zur Hauptsteuerungseinrichtung bzw. Hauptsteuerung. Die Anzahl der Erweiterungsmodule die vorteilhafterweise gleichzeitig eingesetzt werden können sind vorteilhafterweise nur durch die verwendete Netzwerktechnik begrenzt, vorliegend beispielhaft auf 252 mit gleicher Anfangsadresse. Sollen mehr Erweiterungsmodule eingesetzt werden ist ab Erweiterungsmodul 253 die Anfangsadresse zu ändern, so dass weitere 253 Erweiterungsmodule angeschlossen werden können. Somit lassen sich erfindungsgemäß vorteilhafterweise auch große Netzwerke mit modularen Funktionsbaugruppen realisieren. Ferner weist das Erweiterungsmodul 4 (PV-Modul Kühlung und Wärmeregelung von Wärmetauscher Generatoren) einen Mikroprozessor mit analogen Eingängen, digitalen Ausgängen und eine Istwert-Temperaturerfassung als Zusatzelemente auf (vgl. Fig. 16).

Da die Leistung der PV-Module bei höheren Wafertemperaturen (größer 25 °C) abfällt (siehe beispielsweise Technische Daten von PV-Modulen) ist es vorteilhafterweise vorgesehen, ab einem einstellbaren Temperatursollwert, welcher vorzugsweise oberhalb von 45 °C liegt, die Module zu kühlen. Dazu ist es vorteilhafterweise ausreichend, dass die Oberfläche des Modules gekühlt wird um die Wärme die sich im inneren des Modules gebildet hat zu senken. Vorteilhafterweise erfolgt Kühlung mit Wasser, da eine Luftkühlung derzeit aufgrund der spezifischen Wärmekapazitäten nicht so effektiv ist. Vorteilhafterweise wird mittels einer Pumpe beispielsweise Brunnenwasser (in der Regel mit Temperaturen kleiner gleich 18 °C) oder Wasser aus einem Speicher auf, unter und/oder über die installierten Module geführt. Der thermische Konvektionseffekt zwischen Dach und Modulen bewirkt, dass die Wärme auf der Modulrückseite durch den sich bildenden Konvektionsluftstrom abgeführt wird. Der gleiche Effekt ist bei einer Oberflächenflächenbenetzung der Module gegeben. Darüber hinaus wird die Temperatur durch den direkten Kontakt auf der Moduloberfläche schneller gesenkt, so dass damit auch ein rascherer Austausch der Temperaturverhältnisse von innen nach außen des Moduls realisiert wird. Diese beiden Konvektionsarten ermöglichen letztendlich vorteilhafterweise ein Absenken der Wafertemperatur und somit vorteilhafterweise eine Anhebung bzw. Steigerung der Leistung des Moduls.

Vorteilhafterweise ist für die Kühlung eine Pumpe vorgesehen, welche das Kühlmedium zu den Modulen führt, wo es dann vorteilhafterweise über ein Schlauchoder Rohrsystem verteilt wird. Für die Pumpe wird vorteilhafterweise mittels Koppelrelais ein Leistungsschütz geschaltet, das wiederum die Pumpe mit einer beliebigen Energiequelle in Gang setzt (vgl. beispielsweise Fig. 13). Die Regelung erfolgt vorteilhafterweise in Abhängigkeit der von der Wetterstation zugeführten Werte bzw. Parameter Außentemperatur, Windstärke und Regensensor, sowie der vom Erweiterungsmodul 4 (PV-Modul Kühlung und Wärmeregelung von Wärmetauscher Generatoren) erfassten aktuellen Temperatur auf der Oberfläche eines Modules, die von der Software in der Hauptsteuerung eingelesen, verarbeitet und in ein Steuersignal "Pumpe EIN/AUS" umgesetzt wird (vgl. Fig. 16). Das Abwasser wird entweder dem öffentlichen Kanalnetz zugeführt, oder vorteilhafterweise für eine weitere Verwendung gesammelt.

Die Wärmeregelung für den Wärmetauscher (WT), der durch die Abgasführung und/oder Abwärme des Motors von einem oder mehreren Stromgeneratoren gespeist wird, erfolgt mittels Temperaturerfassung durch das gleiche Erweiterungsmodul 4 (PV-Modul Kühlung und Wärmeregelung von Wärmetauscher Generatoren), wie in Fig. 16 dargestellt.

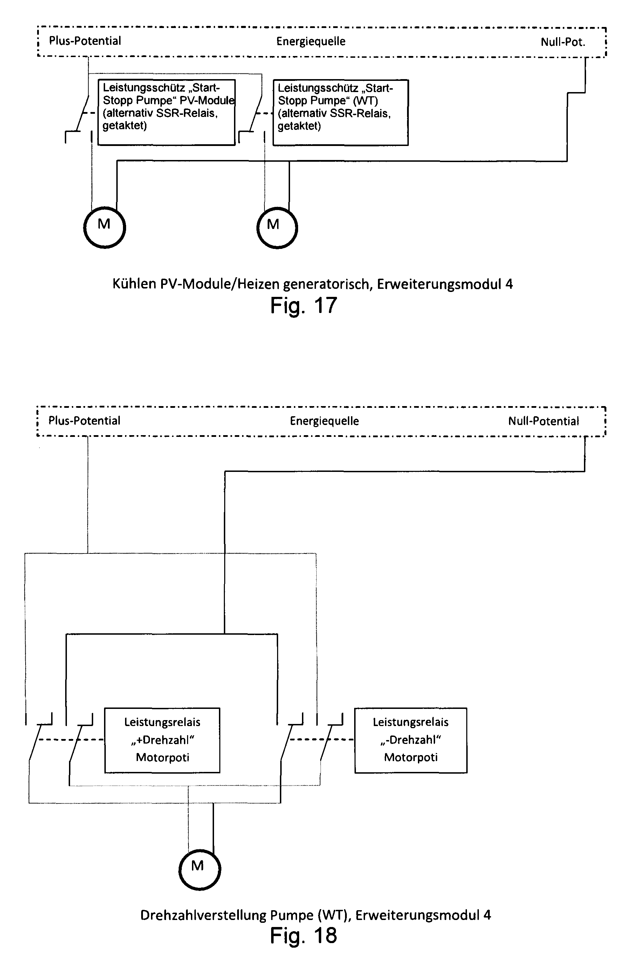

Die Flussregelung des Tauschmediums des Wärmetauschers (WT), beispielsweise Wasser oder Öl, erfolgt vorteilhafterweise über eine drehzahlabhängige Pumpe mit einer beliebigen Energiequelle, welche durch das Erweiterungsmodul 4 (PV-Modul Kühlung und Wärmeregelung von Wärmetauscher Generatoren) potentialfrei angesteuert wird. Als aktueller Wert für eine Drehzahl wird hierzu vorteilhafterweise die Temperatur im Wärmetauscher (WT) durch das Erweiterungsmodul 4 (PV-Modul Kühlung und Wärmeregelung von Wärmetauscher Generatoren) eingelesen und durch die Software der Hauptsteuerung verarbeitet und als Stellsignal "+Drehzahl" oder "-Drehzahl" ausgegeben, wenn die Pumpe durch das Signal "Start-Stopp Pumpe (WT)" eingeschaltet wurde. Die tatsächliche Drehzahl der Pumpe wird hierzu durch das Erweiterungsmodul 4 (PV-Modul Kühlung und Wärmeregelung von Wärmetauscher Generatoren) erfasst und dem Regelkreis in der Software von dem die Regelung ausgeführt als Referenzwert zugeführt, wobei der Referenzwert dem Sollwert entspricht. Als Drehzahlregler für die Pumpe dient vorzugsweise ein Gleichstromsteller (vgl. Fig. 18).

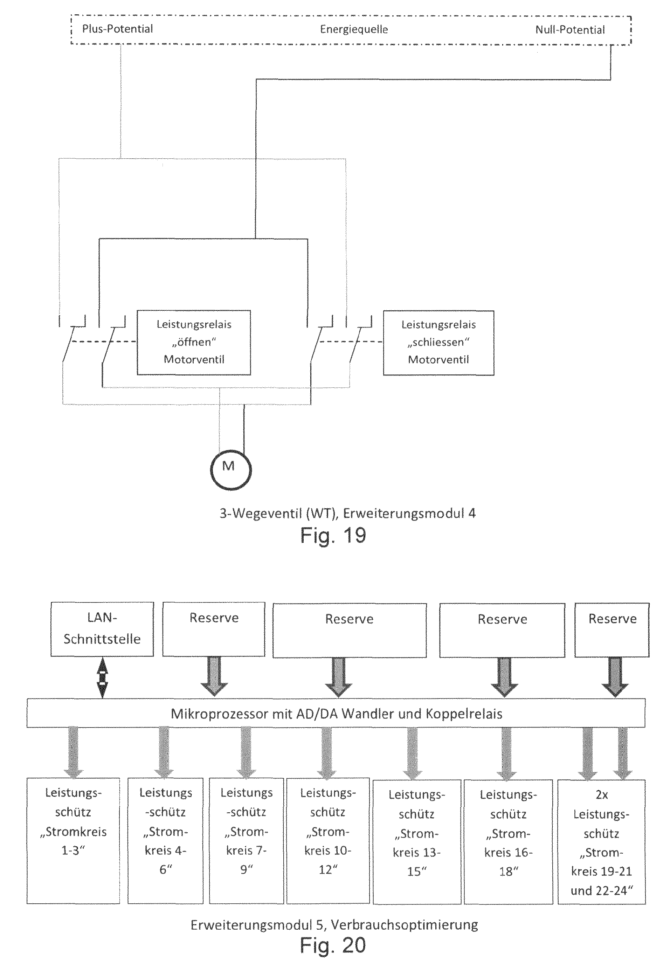

Über die erfasste Temperatur vor oder hinter einem 3-Wege Ventil kann vorteilhafterweise eine zusätzliche unabhängige Regelung beispielsweise für einen Heiz- oder Kühlkreis aufgebaut werden. Dazu wird Temperatur "3-Wege" erfasst, durch die Software in der Hauptsteuerung verarbeitet und als Stellsignal "3-Wege auf" oder "3-Wege zu" ausgegeben (vgl. Fig. 16 und Fig. 19). Die Spannungsversorgung erfolgt vorteilhafterweise direkt über das Speichermedium. Vorzugsweise über potentialfreie Kontakte für spezifische Anpassungen.

Alternativ und/oder ergänzend ist der Regelkreis (WT) vorteilhafterweise auch als Regelkreis für einen Wärmetauscher nutzbar, welcher durch Sonnenenergie gespeist wird. Hierbei regelt die aktuelle Temperatur des Wärmetauschers die Drehzahl einer Förderpumpe für eine Frischwasserzufuhr in den Wärmetauscher. Vorteilhafterweise lässt sich mit dieser Regelung indirekt die Drehzahl einer Dampfturbine oder eines Sterlingmotors bzw. eines daran gekoppelten Generators regeln, insbesondere um eine größtmögliche Nutzung von erzeugter Energie im Rahmen zulässiger Parameter, realisieren zu können.

Die beiden Schütze "Verbrauchsmanagement" mit je drei potentialfreien Kontakten sind vorteilhafterweise in der Lage über die Software der Hauptsteuerung, mittels zweier Wochen-/Tagesschalturen und der aktuellen Speichermediums Situation, eine beliebige Anzahl von Anwender-programmierbaren Schaltprogrammen abzuarbeiten. Hierzu werden die beiden Schütze unabhängig voneinander geschlossen (EIN) oder geöffnet (AUS) geschaltet. Damit lassen sich vorliegend sechs getrennte Stromkreise, mit zwei mal drei Phasen des normalen 230/400VAC Hausnetzes schalten (Fig. 16).

### Erweiterungsmodul 5 (Verbrauchsenergiemanagement):

Das Erweiterungsmodul 5 (Verbrauchsenergiemanagement) zum automatischen Verbrauchsenergiemanagement für eine Betreiberanlage erhält seine Spannungsversorgung vorliegend aus dem Speichermedium (vgl. Fig. 6). Es verfügt über eine sogenannte LAN- und/oder WLAN-Netzwerk-Schnittstelle für eine entsprechende Verbindung über ein Netzwerk zur Hauptsteuerungseinrichtung bzw. Hauptsteuerung. Die Anzahl der Erweiterungsmodule die vorteilhafterweise gleichzeitig eingesetzt werden können sind vorteilhafterweise nur durch die verwendete Netzwerktechnik begrenzt, vorliegend beispielhaft auf 252 mit gleicher Anfangsadresse. Sollen mehr Erweiterungsmodule eingesetzt werden ist ab Erweiterungsmodul 253 die Anfangsadresse zu ändern, so dass weitere 253 Erweiterungsmodule angeschlossen werden können. Somit lassen sich erfindungsgemäß vorteilhafterweise auch große Netzwerke mit modularen Funktionsbaugruppen realisieren. Ferner weist das Erweiterungsmodul 5 (Verbrauchsenergiemanagement) einen Mikroprozessor mit analogen Eingängen und digitalen Ein- und Ausgängen als Zusatzelemente auf (vgl. Fig. 20).

Die acht Leistungsschütze "Verbrauchsmanagement" mit je drei potentialfreien Kontakten sind vorliegend ausgebildet und/oder eingerichtet über die Software der Hauptsteuerung, mittels acht Wochen-/Tagesschaltuhren und der aktuellen Situation des Speichermediums, eine beliebige Anzahl von Anwender-programmierten Schaltprogrammen abzuarbeiten. Hierzu werden vorteilhafterweise die potentialfreien Kontakte geschlossen (EIN) oder geöffnet (AUS) geschaltet. Damit lassen sich bis zu 24 getrennte Stromkreise (acht mal drei Phasen) des normalen 230/400VAC Hausnetzes verbrauchsoptimiert schalten. Ferner sind vorliegend vorteilhafterweise vier weitere analog/digital Eingänge für kundenspezifische Anpassungen bei dem Erweiterungsmodul 5 (Verbrauchsenergiemanagement) für weitere Einbindungsmöglichkeiten von Abhängigkeiten zur Integration in die Software der Hauptsteuerung vorgesehen.

Das erfindungsgemäße Laderegler-System zur Steuerung und/oder Regelung elektrischer Energie und/oder thermischer Energie aus erneuerbaren Quellen realisiert durch seinen modularen Aufbau von Baugruppen bzw. Funktionsmodulen (Basismodul und Erweiterungsmodule 1 bis 5) eine komplette Verschaltung und Nutzung der verschiedenen Energien, vorliegend Windkraft aus Mikro-/Kleinwindkraftanlagen, Photovoltaik und Energieerzeugung aus Stromgeneratoren. Ferner erlaubt das Laderegler-System einfach und modular erneuerbare Energieformen, wie auch fossile Energieträger zur Strom- und Wärmegewinnung einzubinden (beispielsweise sogenannte BHKW's). Eine komplette Steuerung, Überwachung, Regelung und Visualisierung erfolgt vorteilhafterweise durch die Ladereglersoftware in der Hauptsteuerung.

Ferner ist eine Regelung der aus Solarthermie (Wärmeerzeugung durch Sonnenenergie) erzeugten Wärme umsetzbar durch die Konstruktion eines oder mehrerer zusätzlicher Erweiterungsmodule, welche die speziellen Anforderungen und Aufgaben derselben erfüllt. Die Regelung erfolgt vorteilhafterweise ebenfalls durch die Ladereglersoftware in der Hauptsteuerung.

Darüber hinaus erlaubt das Laderegler-System eine Verbesserung und Optimierung der Energieausbeute aus PV-Modulen, vorteilhafterweise durch eine automatische Nachstellung der einzelnen Module zum aktuellen Sonnenstand, welche vorteilhafterweise durch die Ladereglersoftware in der Hauptsteuerung automatisch optimiert wird.

Ferner ermöglicht das erfindungsgemäße Laderegler-System eine Bediener- und Anwender-freundliche Integration von verschiedenen Komponenten und Steuerungsmöglichkeiten, insbesondere durch eine flexible, und beliebig erweiterbare Verwendung von Erweiterungsmodulen.

Durch die erfindungsgemäß gegebene Vernetzung der Module des Laderegler-Systems mit der Hauptsteuerung ist vorteilhafterweise ferner eine Fernwartung über das Internet realisierbar. Ferner ist eine Integration von verschiedenen Erweiterungsmodulen, als dezentrale Einheiten in die Hauptsteuerung durch Vernetzung ermöglicht, so dass sich auch größere Distanzen zwischen den einzelnen Erweiterungsmodulen einfach überbrücken lassen.

Die in den Figuren der Zeichnung dargestellten Ausführungsbeispiele der Erfindung und die im Zusammenhang mit diesen beschriebenen Ausführungsbeispiele der Erfindung dienen lediglich der Erläuterung der Erfindung und sind für diese nicht beschränkend.

## Patentansprüche

1. Laderegler-System zur Steuerung und/oder Regelung
von
wenigstens einer Anlage zur dezentralen Erzeugung elektrischer und/oder thermischer Energie aus erneuerbaren Quellen,
wenigstens einer Einrichtung zur Speicherung elektrischer Energie,
welche von bzw. mittels der wenigstens einen Anlage zur dezentralen Erzeugung elektrischer und/oder thermischer Energie aus erneuerbaren Quellen mit elektrischer Energie geladen wird,
und
wenigstens einem elektrischen Verbraucher,
welcher von der Einrichtung zur Speicherung elektrischer Energie und/oder von bzw. mittels einer Anlage zur Erzeugung elektrischer und/oder thermischer Energie mit elektrischer Energie versorgt wird,
mit
wenigstens einem Modul
zur Regelung der Ladung der Einrichtung zur Speicherung elektrischer Energie durch eine Anlage zur Erzeugung elektrischer und/oder thermischer Energie, und
zur Steuerung der Versorgung eines elektrischen Verbrauchers durch die Einrichtung zur Speicherung elektrischer Energie und/oder durch die Anlage zur Erzeugung elektrischer und/oder thermischer Energie,
und
einer zentralen Hauptsteuerungseinrichtung
zur Steuerung des wenigstens einen Moduls,
wobei
das wenigstens eine Modul und die zentrale Hauptsteuerungseinrichtung über ein drahtgebundenes lokales Netzwerk (LAN) und/oder ein drahtloses lokales Netzwerk (WLAN) miteinander vernetzt sind.

2. Laderegler-System nach Anspruch 1, **dadurch gekennzeichnet, dass** das wenigstens eine Modul
eine Spannungsversorgung,
welche vorzugsweise mit der Einrichtung zur Speicherung elektrischer Energie verbunden ist,
einen Mikroprozessor
mit analogen Eingängen und digitalen Ein- und Ausgängen,
einer Schnittstelle zum Anschluss des Moduls an das lokale Netzwerk (LAN/WLAN),
und
wenigstens ein Leistungsschütz und/oder einen Brückengleichrichter für jede Anlage zur Erzeugung elektrischer und/oder thermischer Energie und/oder jeden elektrischen Verbraucher,
welches bzw. welcher über ein Koppelrelais von dem Mikroprozessor schaltbar ist,
aufweist.

3. Laderegler-System nach Anspruch 2, **dadurch gekennzeichnet, dass** das Modul ferner
wenigstens eine Hochleistungsdiode für jede angeschlossene Anlage zur Erzeugung elektrischer und/oder thermischer Energie aufweist.

4. Laderegler-System nach Anspruch 2 oder Anspruch 3, **dadurch gekennzeichnet, dass** das Modul ferner
Großkondensatoren aufweist, die ein gleichmäßiges Laden der Einrichtung zur Speicherung elektrischer Energie ermöglichen.

5. Laderegler-System nach einem der Ansprüche 1 bis 4, **dadurch gekennzeichnet, dass** die zentrale Hauptsteuerungseinrichtung
wenigstens eine Recheneinrichtung
wenigstens eine Speichereinrichtung,
eine Schnittstelle zum Anschluss der zentralen Hauptsteuerungseinrichtung an das lokale Netzwerk (LAN/WLAN),
wenigstens eine Ausgabeeinrichtung,
und
wenigstens eine Eingabeeinrichtung,
aufweist.

6. Laderegler-System nach einem der Ansprüche 1 bis 5, **gekennzeichnet durch** eine Einrichtung zur Erfassung von vorzugsweise ortsbezogenen Wetterinformationen, insbesondere umfassend Informationen hinsichtlich Temperatur, Lichtintensität, Lichtstärke, Windstärke, Niederschlag, und/oder Niederschlagsmenge, welche mit der zentralen Hauptsteuerungseinrichtung verbindbar ist, vorzugsweise direkt oder über das lokale Netzwerk (LAN/WLAN).

7. Laderegler-System nach einem der Ansprüche 1 bis 6, **gekennzeichnet durch** wenigstens eine Möglichkeit der Fernwartung der Hauptsteuerung und/oder der einzelnen Module über das lokale Netzwerk (LAN/WLAN), vorzugsweise mittels Internet.

8. Laderegler-System nach einem der Ansprüche 1 bis 7, wobei das System im Falle von erforderlichen Wartungs- und/oder Reaktionsanforderungen durch den Bediener bzw. Betreiber des Laderegler-Systems diesem automatisch eine entsprechende Benachrichtigung über das lokale Netzwerk (LAN/WLAN) zukommen lässt, vorzugsweise über das Internet mittels E-Mail.

9. Laderegler-System nach einem der Ansprüche 1 bis 8, wobei die zentrale Hauptsteuerungseinrichtung eine speicherprogrammierbare Steuerung (selbstständige Hauptsteuerung) aufweist, die derart ausgebildet und/oder eingerichtet ist, dass sämtliche Funktionalitäten des wenigstens einen Moduls als intelligenter Laderegler realisierbar sind.
